# EUROPEAN PATENT APPLICATION

(11) **EP 4 797 470 A1**
(43) Date of publication of application: **26.08.2026**
(21) Application number: 26155972.8
(22) Date of filing: 03.02.2026
(51) Int. Cl.: H02B 1/28, H02B 1/56, H02B 13/025

(54) **A GAS-DUCT COMPARTMENT FOR A SWITCHGEAR CABINET, AND A SWITCHGEAR CABINET THEREOF**

(30) Priority: 25.02.2025 IN 202541016564
(71) Applicant: ABB Schweiz AG, 5400 Baden (CH)
(72) Inventor: SONONE, Ujval, 422010 Nashik (IN); DUSANE, Gayatri, 422004 Nashik (IN); NARODE, Deepak, 422101 Nashik (IN); YADAV, Dilip, 422010 Nashik (IN)
(74) Representative: Zimmermann & Partner Patentanwälte mbB

(57) **Abstract**

A gas-duct compartment (1004) for a switchgear cabinet (1000) is described. The gas-duct compartment (1004) includes an enclosure (10041) comprising a sidewall structure (10042) having a length (L) extending along a vertical axis (V-V") of the switchgear cabinet (1000). The sidewall structure (10042) is defined with a first end (FE) and an open second end (SE). A roof panel (10043) being structured to encompass the first end (FE) of the sidewall structure (10042). The enclosure (10041) being defined with one or more vents (10044) in at least one of the sidewall structure (10042), or a space defined in the roof panel (10043). The gas-duct compartment (1004) further includes a filter element (10046) being structured to be disposed at the one or more vents (10044).

## Description

### TECHNICAL FIELD

Present disclosure relates in general to an electrical power system. More particularly, the present disclosure relates to an electrical switchgear cabinet of the electrical power system. Further embodiments of the present disclosure relates to a gas-duct compartment of the electrical switchgear cabinet.

### BACKGROUND OF THE DISCLOSURE

Electrical switchgears are used in electrical power distribution systems to distribute electrical power and selectively isolate electrical loads. Switchgears are produced in many forms. Typically, a switchgear includes a combination of electrical elements, such as disconnectors, fuses, circuit breakers and a main distribution bus or a busbar. Switchgears are installed in the power system at appropriate locations to make and break the power supply in normal or abnormal working conditions like overload and short circuits due to internal and external factors. The circuit breaker protects the electrical power system from damage caused by the excess flow of electrical current due to overload or short circuit. The circuit breaker breaks current passages by disconnecting contacts and interrupts electrical current flow once the fault is detected. Said switchgears are located where electrical distribution, isolation and/or protection is required. These switchgear installations are normally located at power generation, transmission, distribution substation. In addition to use in residential or commercial applications, the switchgears find its application in harsh environments with dust, chemical fumes, etc. Such foreign particles pass into the switchgear and may cause premature failures of the switchgears.

The information disclosed in this background of the disclosure section is only for enhancement of understanding of the general background of the invention and should not be taken as an acknowledgement or any form of suggestion that this information forms the prior art already known to a person skilled in the art.

### SUMMARY OF THE DISCLOSURE

One or more shortcomings of assembly, systems are overcome, and additional advantages are provided through the assembly and the system as claimed in the present disclosure. Additional features and advantages are realized through the techniques of the present disclosure. Other embodiments and aspects of the disclosure are described in detail herein and are considered a part of the claimed disclosure.

In a one non-limiting embodiment of the disclosure, a gas-duct compartment for a switchgear cabinet is described. The gas-duct compartment includes an enclosure. The enclosure being structured to be secured to a roof plate of the switchgear cabinet. The roof plate being disposed on a top wall of at least one of a circuit breaker compartment, a low voltage compartment, a busbar compartment, and/or a cable compartment. The roof plate being defined with a plurality of louvers for exchange of gases between the enclosure and the circuit breaker compartment, the low voltage compartment, the busbar compartment, and/or the cable compartment. The enclosure comprising a sidewall structure having a length extending along a vertical axis of the switchgear cabinet. The sidewall structure is defined with a first end and an open second end. A roof panel being structured to encompass the first end of the sidewall structure. The enclosure being defined with one or more vents in at least one of the sidewall structure, or a space defined in the roof panel. The gas-duct compartment further includes a filter element being structured to be disposed at the one or more vents.

In an embodiment of the disclosure, the roof panel comprises a first portion being structured to abut a peripheral portion of the first end and a second portion of the roof panel being elevated from the first portion in a vertical direction along the vertical axis to define the one or more vents, therebetween.

In an embodiment of the disclosure, the gas-duct compartment includes at least one flap disposed proximal to each of the one or more vents. One end of each of the at least one flap being pivotally connected to the first portion of the roof panel and being selectively displaceable between a first position and a second position. In the first position, each of the at least one flap is structured to cover the one or more vents, and in the second position, each of the at least one flap is displaced away from the one or more vents to uncover the one or more vents.

In an embodiment of the disclosure, the at least one flap is defined with a plurality of slits.

In an embodiment of the disclosure, the at least one flap being defined with a receiving pocket. The receiving pocket being defined on a major surface of the at least one flap facing an inner portion of the enclosure. The receiving pocket is defined by a pair of arms and a restraining member.

In an embodiment of the disclosure, the pair of arms being structured to protrude at least substantially perpendicularly, or at a pre-defined angle from the major surface of the at least one flap and being separated by a distance, and the restraining member extending between the pair of arms, thereby defining a gap between each of the at least one flap and the restraining member. The gap structured to receive the filter element.

In an embodiment of the disclosure, the filter element is at least one of a high efficiency particulate air (HEPA) filter, an Ultra Low Particulate Air (ULPA), electrostatic filter, media filter, spun glass filter, or a pleated filter.

In an embodiment of the disclosure, the filter element is stowed within the enclosure in the first position of the at least one flap.

In an embodiment of the disclosure, the gas-duct compartment includes a locking unit associated with each of the at least one flap. The locking unit being structured to lock the at least one flap in the first position and being operable to unlock the at least one flap relative one other to displace the at least one flap to the second position.

In an embodiment of the disclosure, the gas-duct compartment includes a duct. One end of the duct being secured to an opening defined in the sidewall structure and extending therefrom along a transverse axis. An other end of the duct opposite to the one end being defined with the one or more vents.

In an embodiment of the disclosure, the filter element is secured to the each of the one or more vents defined in the duct.

In another non-limiting embodiment of the disclosure, a switchgear cabinet is described. The switchgear cabinet includes a low voltage compartment, a cable compartment, a circuit breaker compartment, a bus bar compartment, and a gas-duct compartment. The gas-duct compartment being structured to be secured to a roof plate of the switchgear cabinet. The roof plate being contiguous with a top wall of the circuit breaker compartment, low voltage compartment, the busbar compartment, and the cable compartment. The roof plate being defined with a plurality of louvers for exchange of gases between the gas-duct compartment, and the circuit breaker compartment, low voltage compartment, the busbar compartment, and the cable compartment. The gas-duct compartment including a sidewall structure having a length extending along a vertical axis of the switchgear cabinet. The sidewall structure is defined with a first end and an open second end. A roof panel is structured to encompass the first end of the sidewall structure. A first portion of the roof panel is structured to abut a peripheral portion of the first end and a second portion of the roof panel is elevated from the first portion in an vertical direction along the vertical axis to define one or more vents, therebetween. Further, at least one flap is disposed proximal to each of the one or more vents. One end of the each of the at least one flap is pivotally connected to the first portion of the roof panel and being selectively displaceable between a first position and a second position. The gas-duct compartment further includes a filter element. The filter element being disposed in a receiving pocket defined in the at least one flap on a major surface facing an inner portion of the enclosure.

In yet another non-limiting embodiment of the disclosure, a switchgear cabinet is described. The switchgear cabinet includes a low voltage compartment, a cable compartment, a circuit breaker compartment, a bus bar compartment, and a gas-duct compartment. The gas-duct compartment being structured to be secured to a roof plate of the switchgear cabinet. The roof plate being contiguous with a top wall of the circuit breaker compartment, low voltage compartment, the busbar compartment, and the cable compartment. The roof plate being defined with a plurality of louvers for exchange of gases between the gas-duct compartment, and the circuit breaker compartment, low voltage compartment, the busbar compartment, and the cable compartment. The gas duct compartment includes a sidewall structure having a length extending along a vertical axis of the switchgear cabinet. The sidewall structure is defined with a first end and an open second end. Further, one sidewall of the sidewall structure is defined with an opening. A roof panel is structured to encompass the first end of the sidewall structure. The switchgear cabinet includes a duct. One end of the duct being secured to the opening defined in the sidewall structure and extending therefrom along a transverse axis. An other end of the duct opposite to the one end being defined with the one or more vents. A filter element is structured to be secured to the one or more vents.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING FIGURES

The novel features and characteristics of the disclosure are set forth in the appended claims. The disclosure itself, however, as well as a mode of use, further objectives, and advantages thereof, will best be understood by reference to the following detailed description of embodiments when read in conjunction with the accompanying drawings. One or more embodiments are now described, by way of example only, with reference to the accompanying drawings wherein like reference numerals represent like elements and in which:
Fig. 1 and Fig. 2 illustrate perspective views of a switchgear cabinet with a gas duct, in accordance with embodiments of the disclosure;
Fig. 3 illustrates a perspective view of the gas duct with at least one flap in a closed condition, in accordance with embodiments of the disclosure;
Fig. 4 illustrates a perspective view of the gas duct with the at least one flap in an open condition, in accordance with an embodiment of the disclosure;
Fig. 5 illustrates a perspective view of the gas duct with a filter element, in accordance with an embodiment of the present disclosure;
Fig. 6 illustrates a perspective view of the gas duct including a locking unit with magnified view of the locking unit, in accordance with an embodiment of the present disclosure; and

The figures depict embodiments of the disclosure for purposes of illustration only. One skilled in the art will readily recognize from the following description that alternative embodiments of the actuation assemblies illustrated herein may be employed without departing from the principles of the disclosure described herein.

### DETAILED DESCRIPTION

The foregoing has broadly outlined the features and technical advantages of the present disclosure in order that the description of the disclosure that follows may be better understood. Additional features and advantages of the disclosure will be described hereinafter which form the subject of the disclosure. It should be appreciated by those skilled in the art that the conception and specific embodiments disclosed may be readily utilized as a basis for modifying or designing other systems for carrying out the same purposes of the present disclosure. It should also be realized by those skilled in the art that such equivalent constructions do not depart from the scope of the disclosure. The novel features which are believed to be characteristic of the disclosure, as to its organization, together with further objects and advantages will be better understood from the following description when considered in connection with the accompanying figures. It is to be expressly understood, however, that each of the figures is provided for the purpose of illustration and description only and is not intended as a definition of the limits of the present disclosure.

While the disclosure is susceptible to various modifications and alternative forms, specific embodiments thereof have been shown by way of example in the drawings and will be described below. It should be understood, however, that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof used in the disclosure, are intended to cover a non-exclusive inclusion, such that an assembly comprises a list of components does not include only those components but may include other components not expressly listed or inherent to such assemblies. In other words, one or more elements in assemblies proceeded by "comprises" does not, without more constraints, preclude the existence of other elements or additional elements in the system or device.

The following paragraphs describe the present disclosure with reference to Fig(s). 1 to 6. In the figures, the same element or elements which have similar functions are indicated by the same reference signs. For the purpose of promoting an understanding of the principles of the disclosure, reference will now be made to specific embodiments illustrated in the drawings and specific language will be used to describe the same. It will nevertheless be understood that no limitation of the scope of the invention is thereby intended, such alterations and further modifications in the illustrated system or device, and such further applications of the principles of the invention as illustrated, therein being contemplated as would normally occur to one skilled in the art to which the disclosure pertains.

The following detailed description is merely exemplary in nature and is not intended to limit application and uses. Further, there is no intention to be bound by any theory presented in the preceding background or summary or the following detailed description. It is to be understood that the disclosure may assume various alternative orientations and step sequences, except where expressly specified to the contrary. It is also to be understood that the specific devices or components illustrated in the attached drawings and described in the following specification are simply exemplary embodiments of the inventive concepts defined in the appended claims. Hereinafter, preferred embodiments of the present disclosure will be described referring to the accompanying drawings. While some specific terms directed to a specific direction will be used, the purpose of usage of these terms or words is merely to facilitate understanding of the present invention referring to the drawings.

Accordingly, it should be noted that meaning of these terms or words should not improperly limit the technical scope of the present invention. Also, it is to be understood that the phraseology and terminology used herein is for the purpose of description and should not be regarded as limiting. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. It is to be understood that this disclosure is not limited to the specific devices, methods, applications, conditions, or parameters described and/or shown herein, and that the terminology used herein is for the purpose of describing particular embodiments by way of example and is not intended to be limiting of the claimed invention. In the present document, the word "exemplary" is used herein to mean "serving as an example, instance, or illustration." Any embodiment or implementation of the present subject matter described herein as "exemplary" is not necessarily to be construed as preferred or advantageous over other embodiments.

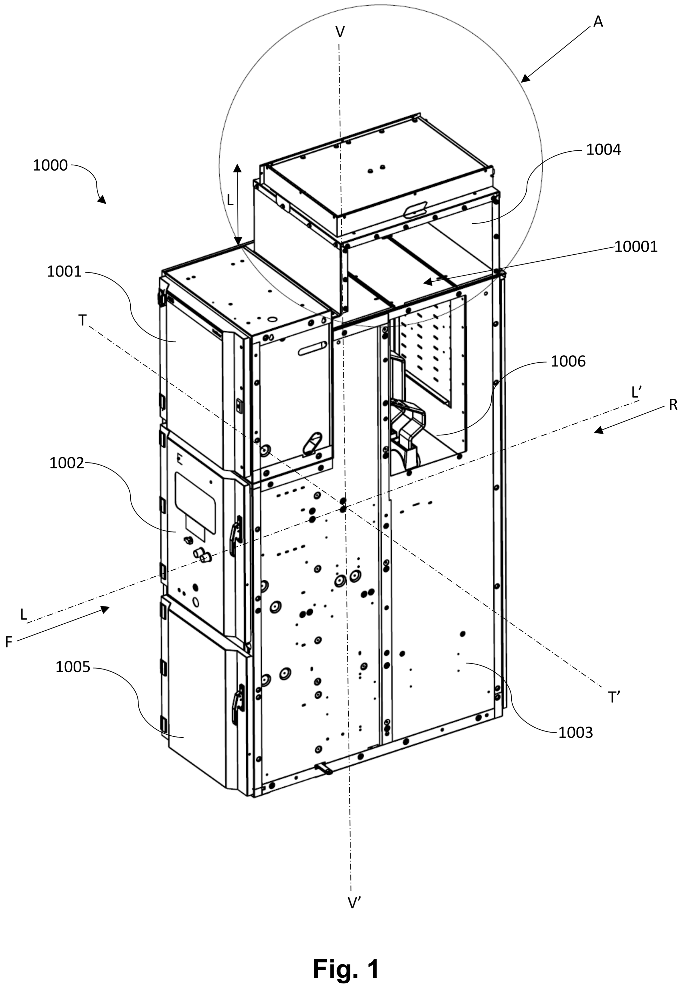

Referring to Fig. 1, there is disclosed an exemplary embodiment of a switchgear cabinet depicted by referral number 1000. The switchgear cabinet 1000 may include one or more electrical equipment/components [in the foregoing description, the term equipment and component are interchangeably used], each configured to perform one or more designated functions. The switchgear cabinet 1000 with the one or more electrical equipment may be adapted as load center in residential and/or commercial establishments including industrial, healthcare centers or educational institutes. The switchgear cabinet 1000 may be used for applications such as but not limiting to low voltage distribution, medium voltage distribution, and/or high voltage distribution. The switchgear cabinet 1000 may include a plurality of switch panels [not shown]. The switch panels may be configured as feed-in panels by means of which electrical power or current may be fed into the switchgear, or they may be distribution panels by means of which the fed-in electrical power or current is distributed to the components. The switchgear cabinet 1000 may include an enclosure.

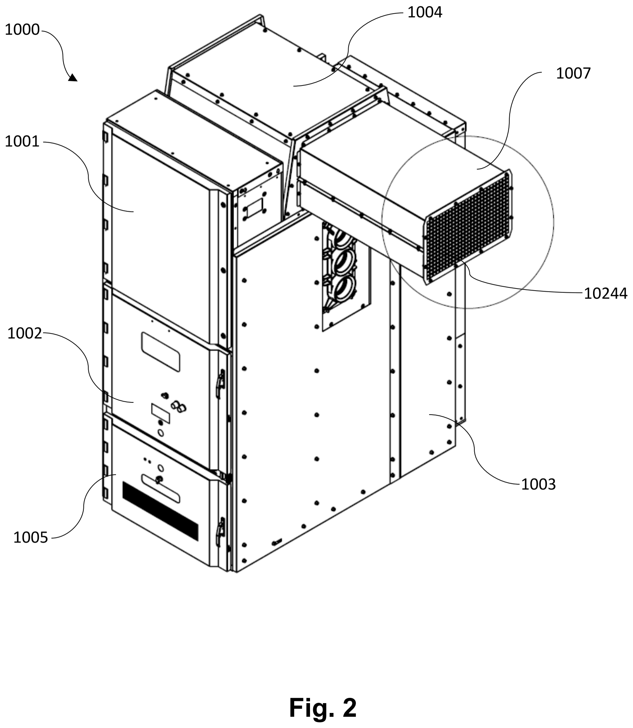

Referring to Fig. 1 and Fig. 2, the enclosure [not explicitly depicted] of the switchgear cabinet 1000 may be defined by a rear wall, and a sidewall structure projecting perpendicularly to and forwardly from the rear wall. The enclosure of the switchgear cabinet 1000 may be configured to define at least one low voltage compartment 1001 [also referred to as "the low voltage compartment 1001"], at least one circuit breaker compartment 1002 [also referred to as "the circuit breaker compartment 1002"], and at least one cable compartment 1003 [also referred to as "the cable compartment 1003"]. The enclosure of the switchgear cabinet 1000 further includes a busbar compartment 1006 [also referred to as "the busbar compartment 1006"]. The compartments described above may be segregated from each other by partitions made of at least one of composite materials or metallic materials but not limiting to the same.

Further, the switchgear cabinet 1000 may include at least one gas duct compartment 1004 which may be provided for evacuation of gases produced during arc/corona arc formation. The at least one gas duct compartment 1004 is elucidated further in the present disclosure. In an embodiment, each of the low voltage compartment 1001, the circuit breaker compartment 1002, the cable compartment 1003, and the busbar compartment 1006 may include a vent path/channel fluidly connecting respective compartments with the gas duct compartment 1004. The vent path/channel being adapted for releasing pressure, gases, and particulate matter into the gas-duct compartment 1004. The pressure and temperature within the switchgear cabinet 1000 may be generated due to the formation of arc/corona arc in the compartments described above. Further, the gas would be released through the vent path/channels to the gas-duct compartment 1004 and may exhaust from the gas-duct compartment 1004 to the atmosphere. The gas duct compartment 1004 of the present disclosure may be secured to a roof plate 10001 of the switchgear cabinet 1000. The roof plate 10001 being disposed on a top wall and being contiguous to the circuit breaker compartment 1002, the low voltage compartment 1001, the busbar compartment 1006, and the cable compartment 1003 of the switchgear cabinet 1000. The roof plate 10001 being defined with a plurality of louvers for exchange of gases between the respective compartments and the gas duct compartment 1004. Furthermore, the gas-duct compartment 1004 may be adapted to receive cooling air from the atmosphere and circulate the cooling air to the respective compartments through the vent path/channels.

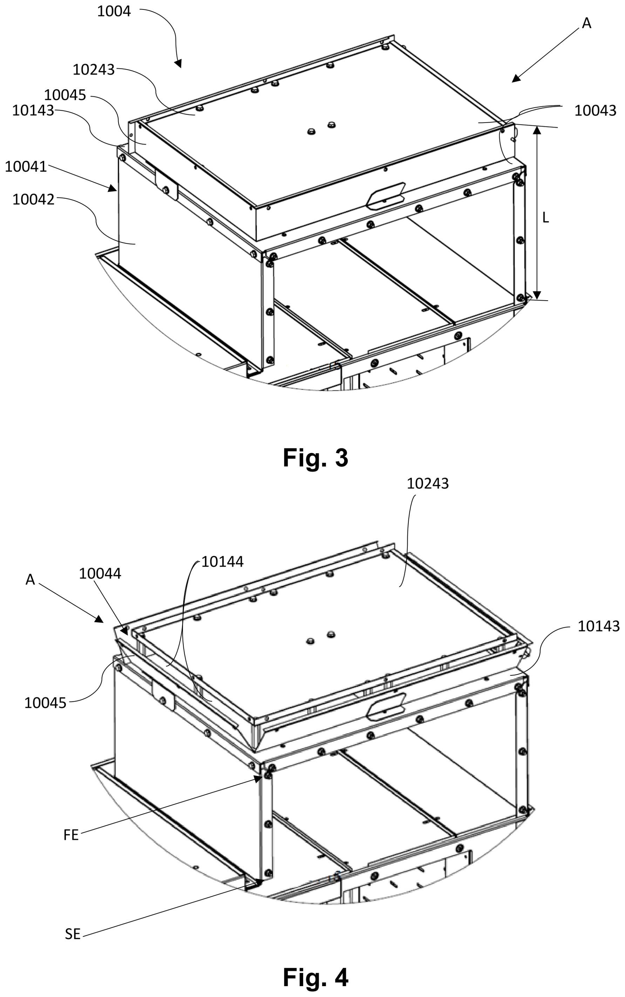

Reference is now being made to Fig(s) 3 to 6 in conjunction with Fig. 1. The gas duct compartment 1004 of the switchgear cabinet 1000 as described above is structured to be secured to the roof plate 10001 of the switchgear cabinet 1000. The gas duct compartment 1004 of the present disclosure includes an enclosure 10041. The enclosure 10041 includes a sidewall structure 10042. The sidewall structure 10042 may have a length L [refer Fig. 1] that may extend along a vertical axis V-V' of the switchgear cabinet 1000. The sidewall structure 10042 of the present disclosure includes a first sidewall, a second sidewall, a third sidewall, and a fourth sidewall. Each of the first, second, third and the fourth sidewall of the sidewall structure 10042 extends in length L in the vertical direction along the vertical axis V-V'. The sidewall structure 10042 may define a cuboidal structure with a first end FE and an open second end SE. The open second end SE may be disposed on the roof plate 10001 and may be secured to the roof plate 10001. The open second end SE may be structured to encompass the plurality of louvers defined on the roof plate 10001 and being configured to enable exchange of gases or the cooling air between the enclosure 10041 of gas-duct compartment 10004 and the respective compartments through the plurality of louvers. Further, the enclosure 10041 may be encompassed by a roof panel 10043 at the first end FE. The gas-duct compartment 1004 may further include one or more vents 10044. The one or more vents in the gas duct compartment 1004 may either be provided in the roof panel 10043 [as shown in Fig. 3 to 6] and the sidewall structure 10042 [as shown in Fig. 2]. The one or more vents defined in the roof panel 10043 is depicted by the reference numeral 10144 and the one or more vents in the sidewall structure 10042 is depicted by the reference numeral 10244. Each configuration illustrated above will be elucidated in detail henceforth.

Reference is now made to Fig(s) 3 to 6, illustrating the gas-duct compartment 1004. In an embodiment, the roof panel 10043 may include a first portion 10143 and a second portion 10243. The first portion 10143 of the roof panel 10043 may be structured to abut a peripheral portion of the first end FE and may be secured to the peripheral portion of the first end FE, thereof. The second portion 10243 of the roof panel 10043 may be elevated from the first portion 10143 of the roof panel 10043 in a vertical direction along the vertical axis V-V', thereby defining the one or more vents 10144 between the first portion 10143 and the second portion 10243. The gas-duct compartment 1004 includes at least one flap 10045. The at least one flap 10045 may be structured to selectively cover and uncover the one or more vents 10144 defined between the first portion 10143 and the second portion 10243. Each of the at least one flap 10045 may be disposed proximal to each of the one or more vents 10044. One end of each of the at least one flap 10045 may be pivotally connected to the first portion 10143 of the roof panel 10043. Each of the at least one flap 10045 may be pivotally displaceable between a first position A as show in Fig. 3 and a second position B as shown in Fig. 4 to selectively cover and uncover the one or more vents 10044.

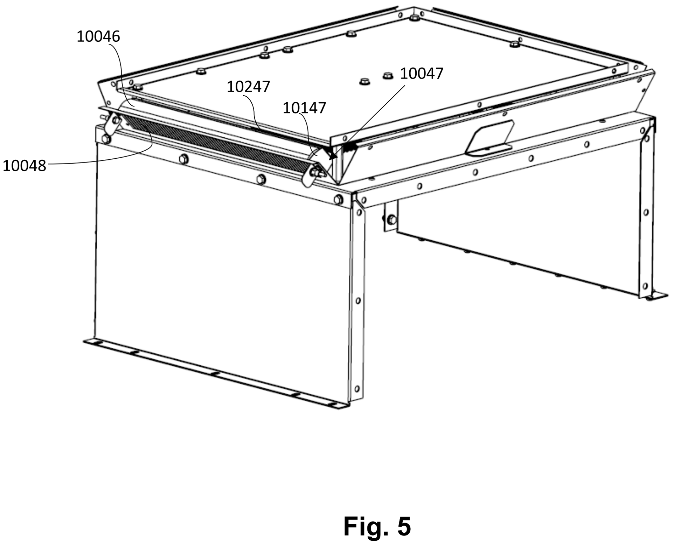

The first position A of each of the at least one flap 10045 may be structured to cover the one or more vents 10044. In the second position B, each of the at least one flap 10045 is displaced away from the one or more vents 10044 to uncover the one or more vents 10044. In an embodiment, each of the at least one flap 10045 may pivotally displace away from the one or more vents 10044 up to a desired extent. A restricting member RM may be disposed on the first portion 10143 and may be connected to each of the at least one flap 10045. The restricting member RM may be adapted to restrict movement of each of the at least one flap 10045 beyond the second position B. Further, one of the at least one flap 10045 may be defined with a plurality of slits 10048 [refer to Fig. 5]. The plurality of slits 10048 may be adapted to exchange gases or the cooling air between the switchgear cabinet 1000 and atmosphere in the first position A of each of the at least one flap 10045.

As shown in Fig. 5, at least one flap 10045 is defined with a receiving pocket 10047. The receiving pocket 10047 is defined on a major surface of the at least one flap 10045 facing an inner portion of the enclosure 10041. The receiving pocket 10047 may be defined by a pair of arms 10147 and a restraining member 10247. In an embodiment, the pair of arms 10147 may be structured to protrude perpendicularly from the major surface of the at least one flap 10045. The pair of arms 10147 may be separated by a distance X [i.e., each arm of the pair of arms 10147 may be defined along the lateral ends of the at least one flap 10045]. Although, the pair of arms 10147 is illustrated to protrude perpendicularly, other pre-defined angular protrusions of the pair of arms 10147 relative to the at least one flap 10045 may be contemplated herein without deviating from the scope of the present disclosure. Further, the restraining member 10247 may be connected to and extending between the pair of arms 10147. The configuration of the pair of arms 10147 and the restraining member 10247 relative to the at least one flap 10045 may define a gap G. The gap G is structured to receive the filter element 10046. The filter element 10046 may be at least one of but not limiting to a high efficiency particulate (HEPA) filter, an Ultra Low Particulate Air (ULPA), electrostatic filter, media filter, spun glass filter, a pleated filter, and the like. Other feasible filter may be contemplated herein without deviating from the scope of the present disclosure. The filter element 10046 being displaceable relative to the displacement of the at least one flap 10045 between the first position A and the second position B. In the first position A of the at least one flap 10045, the filter element 10046 is stowed within the enclosure 10041 and in the second position B of the at least one flap 10045, the filter element 10046 being accessible for a personnel authorized to operate the switchgear cabinet 1000.

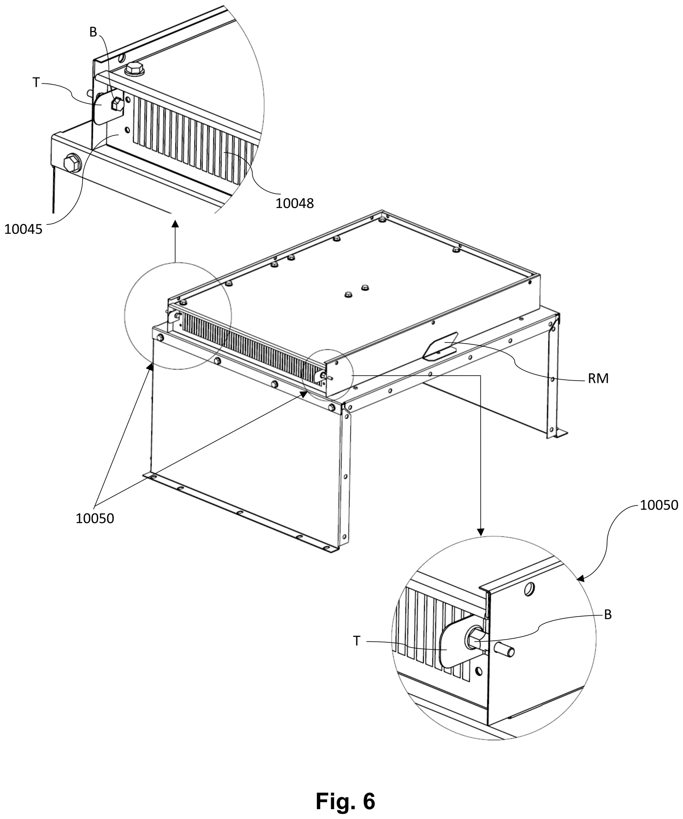

Reference is now made to Fig. 6 in conjunction with Fig(s) 1, and 3 to 5, which illustrate a locking unit 10050 associated with each of the at least one flap 10045. The locking unit 10050 is structured to lock the at least one flap 10045 in the first position A and is operable to unlock the at least one flap 10045 to displace the at least one flap 10045 to the second position B. An embodiment of the locking unit 10050 is illustrated henceforth, and the same should not be construed as a limitation of the present disclosure. As shown in Fig. 6, the locking unit 10050 includes a tab T protruding at the lateral ends of the at least one flap 10045. The tab T protrudes substantially perpendicularly from an other major surface of the at least one flap 10045 facing the atmosphere. The tab T is defined with an aperture structured to receive a locking bolt LB. The locking bolt LB may be engageable with adjoining flap of the at least one flap 10045 to lock each of the at least one flap 10045 relative to one another in the first position A. The locking bolt LB may be operable to disengage from the adjoining flaps of the at least one flap 10045 to displace each of the at least one flap 10045 to the second position B.

Reference is now made to Fig. 2 illustrating another configuration of the gas-duct compartment 1004. As described above, the sidewall structure 10042 may define a cuboidal structure with the first end FE and the open second end SE. The open second end SE may be disposed on the roof plate 10001 and may be secured to the roof plate 10001. The open second end SE may be structured to encompass the plurality of louvers defined on the roof plate 10001 and being configured to enable exchange of gases or the cooling air between the enclosure 10041 of gas-duct compartment 10004 and the respective compartments through the plurality of louvers. Further, the enclosure 10041 may be encompassed by the roof panel 10043 at the first end FE. The roof panel 10043 may be structured to completely seal the first end FE. The gas-duct compartment 1004 may further include one or more vents 10044. The one or more vents in the gas duct compartment 1004 is provided in the sidewall structure 10042 [as shown in Fig. 2]. The one or more vents defined in the sidewall structure 10042 is depicted by the reference numeral 10244. The gas-duct compartment 1004 further includes a duct 1007. One end of the duct 1007 may be secured to an opening defined in the sidewall structure 10042 and may extend therefrom along a transverse axis T-T'. The gas-duct compartment 1004 may define a side exhaust configuration of the switchgear cabinet 1000. An other end of the duct 1007 opposite to the one end connected to the sidewall structure 10042 defines the one or more vents 10044. The filter element 10046 is secured to each of the one or more vents 10044 defined in the duct 1007.

In an embodiment, the switchgear cabinet 1000 of the present disclosure with the filter element 10046 as described above ensures the cooling air flowing into the switchgear cabinet 1000 is free of foreign particles such as dust, chemical fumes and the like. The provision of the filter element 10046 in the switchgear cabinet 1000 of the present disclosure extends the application of the switchgear cabinet 1000 beyond clean-room applications. The configuration of the gas-duct compartment 1004 of the switchgear cabinet 1000 ensures ease of removal and insertion of the filter element 10046. Thus, the switchgear cabinet 1000 of the present disclosure may ensure ease of maintenance of the filter element 10046.

It is to be understood that a person of ordinary skill in the art may develop a system of similar configuration without deviating from the scope of the present disclosure. Such modifications and variations may be made without departing from the scope of the present invention. Therefore, it is intended that the present disclosure covers such modifications and variations provided they come within the ambit of the appended claims and their equivalents.

### Equivalents:

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims e.g., bodies of the appended claims are generally intended as "open" terms e.g., the term "including" should be interpreted as "including but not limited to," the term "having" should be interpreted as "having at least," the term "includes" should be interpreted as "includes but is not limited to," etc.. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" e.g., "a" and/or "an" should typically be interpreted to mean "at least one" or "one or more"; the same holds true for the use of definite articles used to introduce claim recitations. In addition, even if a specific number of an introduced claim recitation is explicitly recited, those skilled in the art will recognize that such recitation should typically be interpreted to mean *at least* the recited number e.g., the bare recitation of "two recitations," without other modifiers, typically means *at least* two recitations, or *two or more* recitations. Furthermore, in those instances where a convention analogous to "at least one of A, B, and C, etc." is used, in general such a construction is intended in the sense one having skill in the art would understand the convention e.g., "a system having at least one of A, B, and C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

Further disclosed herein is the subject-matter of the following clauses:
Clause 1. A Gas-duct compartment (1004) for a switchgear cabinet (1000), the gas-duct compartment (1004) comprising:
   an enclosure (10041) being structured to be secured to a roof plate (10001) of the switchgear cabinet (1000), wherein the roof plate (10001) being disposed on a top wall of at least one of a circuit breaker compartment (1002), a low voltage compartment (1001), a busbar compartment (1006), and/or a cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the enclosure (10041) comprising:
      a sidewall structure (10042) having a length (L) extending along a vertical axis (V-V') of the switchgear cabinet (1000), wherein the sidewall structure (10042) is defined with a first end (FE) and an open second end (SE); and
      a roof panel (10043) being structured to encompass the first end (FE) of the sidewall structure (10042),
   wherein, one or more vents (10044) is defined in at least one of the sidewall structure (10042), or a space defined in the roof panel (10043); and
   a filter element (10046) being structured to be disposed at the one or more vents (10044).
Clause 2. The gas-duct compartment (1004) according to clause 1, wherein the roof panel (10043) comprises a first portion (10143) being structured to abut a peripheral portion of the first end (FE) and a second portion (10243) being elevated from the first portion (10143) in a vertical direction along the vertical axis (V-V') to define one or more vents (10044), therebetween.
Clause 3. The gas-duct compartment (1004) according to any one of clauses 1 and 2 comprises at least one flap (10045) disposed proximal to each of the one or vents (10044), one end of each of the at least one flap (10045) being pivotally connected to the first portion (10143) of the roof panel (10043) and being selectively displaceable between a first position (A) and a second position (B).
Clauses 4. The gas-duct compartment (1004) according to clause 3, wherein in the first position (A), each of the at least one flap (10045) is structured to cover the one or more vents (10044), and in the second position (B), each of the at least one flap (10045) is displaced away from the one or more vents (10044) to uncover the one or more vents (10044).
Clause 5. The gas-duct compartment (1004) according to any one of the preceding clauses, wherein the at least one flap (10045) is defined with a plurality of slits (10048).
Clause 6. The gas-duct compartment (1004) according to any one of the preceding clauses, wherein the at least one flap (10045) being defined with a receiving pocket (10047), the receiving pocket (10047) being defined on a major surface of the at least one flap (10045) facing an inner portion of the enclosure (10041).
Clause 7. The gas-duct compartment (1004) according to clause 6, wherein the receiving pocket (10047) is defined by a pair of arms (10147) and a restraining member (10247).
Clause 8. The gas-duct compartment (1004) according to clauses 6 and 7, wherein the pair of arms (10147) being structured to protrude at least substantially perpendicularly, or at a pre-defined angle from the major surface of the at least one flap (10045) and being separated by a distance (X), and the restraining member (10247) extending between the pair of arms (10147), thereby defining a gap (G) between each of the at least one flap (10045) and the restraining member (10247), the gap (G) structured to receive the filter element (10046).
Clause 9. The gas-duct compartment (1004) according to any one of the preceding clauses, wherein the filter element (10046) is at least one of a high efficiency particulate air (HEPA) filter, an Ultra Low Particulate Air (ULPA), electrostatic filter, media filter, spun glass filter, or a pleated filter.
Clause 10. The gas-duct compartment (1004) according to any one of the previous clauses, wherein the filter element (10046) is stowed within the enclosure (10041) in the first position (A) of the at least one flap (10045).
Clause 11. The gas-duct compartment (1004) according to clause 1 comprises a locking unit (10050) associated with each of the at least one flap (10045), the locking unit (10050) being structured to lock the at least one flap (10045) in the first position (A) and being operable to unlock the at least one flap (10045) relative to one other to displace the at least one flap (10045) to the second position (B).
Clause 12. The gas-duct compartment (1004) according to clause 1 comprises a duct (1007), one end of the duct (1007) being secured to an opening defined in the sidewall structure (10042) and extending therefrom along a transverse axis (T-T').
Clause 13. The gas-duct compartment (1004) according to clause 12, wherein an other end of the duct (1007) opposite to the one end being defined with the one or more vents (10044).
Clause 14. The gas-duct compartment (1004) according to clauses 1, 12 and 13, wherein the filter element (10046) is secured to each of the one or more vents (10044) defined in the duct (1007).
Clause 15. The gas-duct compartment (1004) according to clause 1 comprises a restricting member (RM) disposed on the first portion (10143) and being connectable to each of the at least one flap (10044), the restricting member (RM) being adapted to restrict movement of each of the at least one flap (10044) beyond the second position (B).
Clause 16. A switchgear cabinet (1000) comprising:
   a low voltage compartment (1001);
   a cable compartment (1003);
   a circuit breaker compartment (1002);
   a bus bar compartment (1006);
   a gas-duct compartment (1004), being structured to be secured to a roof plate (10001) of the switchgear cabinet (1000), wherein the roof plate (10001) being contiguous with a top wall of the at least one of the circuit breaker compartment (1002), the low voltage compartment (1001), the busbar compartment (1006), and/or the cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the gas-duct compartment (1004) comprising:
      a sidewall structure (10042) having a length (L) extending along a vertical axis (V-V') of the switchgear cabinet (1000), wherein the sidewall structure is defined with a first end (FE) and an open second end (SE);
      a roof panel (10043) being structured to encompass the first end (FE) of the sidewall structure (10042), a first portion (10143) of the roof panel (10043) being structured to abut a peripheral portion of the first end (FE) and a second portion (10243) of the roof panel (10143) being elevated from the first portion (10143) in a vertical direction along the vertical axis (V-V') to define one or more vents (10044), therebetween;
      at least one flap (10045) is disposed proximal to each of the one or vents (10044), one end of each of the at least one flap (10045) being pivotally connected to the first portion (10143) of the roof panel (10043) and being selectively displaceable between a first position (A) and a second position (B); and
   a filter element (10046) being structured to be disposed in a receiving pocket (10047) defined in the at least one flap (10045) on a major surface facing an inner portion of the enclosure (10041).
Clause 17. The switchgear cabinet (1000) according to clause 16, wherein the receiving pocket (10047) is defined by a pair of arms (10147) and a restraining member (10247).
Clause 18. The switchgear cabinet (1000) according to clause 16, wherein the pair of arms (10147) being structured to protrude perpendicularly from the major surface of the at least one flap (10045) and being separated by a distance (X), and a restraining member (10247) extending between the pair of arms (10147), thereby defining a gap (G) between each of the at least one flap (10045) and the restraining member (10247), the gap (G) structured to receive the filter element (10046).
Clause 19. The switchgear cabinet (1000) according to clause 16 comprises a locking unit (10050) associated with each of the at least one flap (10045), the locking unit (10050) being structured to lock the at least one flap (10045) in the first position (FP) and being operable to unlock the at least one flap (10045) relative to one other to displace the at least one flap (10045) to the second position (SP).
Clause 20. A switchgear cabinet (1000) comprising:
   a low voltage compartment (1001);
   a cable compartment (1003);
   a circuit breaker compartment (1002);
   a bus bar compartment (1006);
   a gas-duct compartment (1004), being structured to be secured to a roof plate (10001) of the switchgear cabinet (1000), wherein the roof plate (10001) being contiguous with a top wall of the at least one of the circuit breaker compartment (1002), the low voltage compartment (1001), the busbar compartment (1006), and/or the cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the gas-duct compartment (1004) comprising:
      a sidewall structure (10042) having a length (L) extending along a vertical axis (V-V') of the switchgear cabinet (1000), wherein the sidewall structure is defined with a first end (FE) and an open second end (SE), and wherein one sidewall of the sidewall structure (10042) is defined with an opening;
      a roof panel (10043) being structured to encompass the first end (FE) of the sidewall structure (10042);
      a duct (1007), one end of the duct (1007) being secured to the opening defined in the sidewall structure (10042) and extending therefrom along a transverse axis (T-T') and an other end of the duct (1007) opposite to the one end being defined with the one or more vents (10044); and
   a filter element (10046) being structured to be secured to the one or more vents (10044).

| Reference Numeral | Description |
|---|---|
| 1000 | Switchgear cabinet |
| 1001 | Low voltage compartment |
| 1002 | Circuit breaker compartment |
| 1003 | Cable compartment |
| 1004 | Gas-duct compartment |
| 10041 | Enclosure |
| 10042 | Sidewall structure |
| 10043 | Roof panel |
| 10143 | First portion of the roof panel |
| 10243 | Second portion of the roof panel |
| 10044 | Vents |
| 10144 | Roof vents |
| 10244 | Side vents |
| 10045 | Flap |
| 10046 | Filter element |
| 10047 | Receiving pocket |
| 10147 | Pair of arms |
| 10247 | Restraining member |
| 10048 | Slits |
| 10050 | Locking unit |
| 1005 | Voltage transformer compartment/Feeder compartment |
| 1006 | Bus bar compartment |
| 1007 | Duct |
| 10001 | Roof plate |
| RM | Restricting member |
| F | Front side |
| R | Rear side |
| A | First position |
| B | Second position |
| T | Tab |
| LB | Locking bolt |
| L-L' | Lateral axis |
| V-V' | Vertical axis |
| T-T' | Transverse axis |

## Claims

1. A Gas-duct compartment (1004) for a switchgear cabinet (1000), the gas-duct compartment (1004) comprising:
an enclosure (10041) being structured to be secured to a roof plate (10001) of the switchgear cabinet (1000), wherein the roof plate (10001) being disposed on a top wall of at least one of a circuit breaker compartment (1002), a low voltage compartment (1001), a busbar compartment (1006), and/or a cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the enclosure (10041) comprising:
a sidewall structure (10042) having a length (L) extending along a vertical axis (V-V') of the switchgear cabinet (1000), wherein the sidewall structure (10042) is defined with a first end (FE) and an open second end (SE); and
a roof panel (10043) being structured to encompass the first end (FE) of the sidewall structure (10042),
wherein, one or more vents (10044) is defined in at least one of the sidewall structure (10042), or a space defined in the roof panel (10043); and
a filter element (10046) being structured to be disposed at the one or more vents (10044).

2. The gas-duct compartment (1004) as claimed in claim 1, wherein the roof panel (10043) comprises a first portion (10143) being structured to abut a peripheral portion of the first end (FE) and a second portion (10243) being elevated from the first portion (10143) in a vertical direction along the vertical axis (V-V') to define one or more vents (10044), therebetween.

3. The gas-duct compartment (1004) as claimed in any one of claims 1 and 2 comprises at least one flap (10045) disposed proximal to each of the one or vents (10044), one end of each of the at least one flap (10045) being pivotally connected to the first portion (10143) of the roof panel (10043) and being selectively displaceable between a first position (A) and a second position (B), particularly wherein in the first position (A), each of the at least one flap (10045) is structured to cover the one or more vents (10044), and in the second position (B), each of the at least one flap (10045) is displaced away from the one or more vents (10044) to uncover the one or more vents (10044).

4. The gas-duct compartment (1004) as claimed in any one of the preceding claims, wherein the at least one flap (10045) is defined with a plurality of slits (10048).

5. The gas-duct compartment (1004) as claimed in any one of the preceding claims, wherein the at least one flap (10045) being defined with a receiving pocket (10047), the receiving pocket (10047) being defined on a major surface of the at least one flap (10045) facing an inner portion of the enclosure (10041), particularly wherein the receiving pocket (10047) is defined by a pair of arms (10147) and a restraining member (10247), more particularly wherein the pair of arms (10147) being structured to protrude at least substantially perpendicularly, or at a pre-defined angle from the major surface of the at least one flap (10045) and being separated by a distance (X), and the restraining member (10247) extending between the pair of arms (10147), thereby defining a gap (G) between each of the at least one flap (10045) and the restraining member (10247), the gap (G) structured to receive the filter element (10046).

6. The gas-duct compartment (1004) as claimed in any one of preceding claims, wherein the filter element (10046) is at least one of a high efficiency particulate air (HEPA) filter, an Ultra Low Particulate Air (ULPA), electrostatic filter, media filter, spun glass filter, or a pleated filter, or wherein the filter element (10046) is stowed within the enclosure (10041) in the first position (A) of the at least one flap (10045).

7. The gas-duct compartment (1004) as claimed in claim 1 comprises a locking unit (10050) associated with each of the at least one flap (10045), the locking unit (10050) being structured to lock the at least one flap (10045) in the first position (A) and being operable to unlock the at least one flap (10045) relative to one other to displace the at least one flap (10045) to the second position (B).

8. The gas-duct compartment (1004) as claimed in claim 1 comprises a duct (1007), one end of the duct (1007) being secured to an opening defined in the sidewall structure (10042) and extending therefrom along a transverse axis (T-T'), particularly wherein an other end of the duct (1007) opposite to the one end being defined with the one or more vents (10044).

9. The gas-duct compartment (1004) as claimed in claims 1 and 8, wherein the filter element (10046) is secured to each of the one or more vents (10044) defined in the duct (1007).

10. The gas-duct compartment (1004) as claimed in claims 1 comprises a restricting member (RM) disposed on the first portion (10143) and being connectable to each of the at least one flap (10044), the restricting member (RM) being adapted to restrict movement of each of the at least one flap (10044) beyond the second position (B).

11. A switchgear cabinet (1000) comprising:
a low voltage compartment (1001);
a cable compartment (1003);
a circuit breaker compartment (1002);
a bus bar compartment (1006);
a gas-duct compartment (1004), being structured to be secured to a roof plate (10001) of the switchgear cabinet (1000), wherein the roof plate (10001) being contiguous with a top wall of the at least one of the circuit breaker compartment (1002), the low voltage compartment (1001), the busbar compartment (1006), and/or the cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the gas-duct compartment (1004) comprising:
a sidewall structure (10042) having a length (L) extending along a vertical axis (V-V') of the switchgear cabinet (1000), wherein the sidewall structure is defined with a first end (FE) and an open second end (SE);
a roof panel (10043) being structured to encompass the first end (FE) of the sidewall structure (10042), a first portion (10143) of the roof panel (10043) being structured to abut a peripheral portion of the first end (FE) and a second portion (10243) of the roof panel (10143) being elevated from the first portion (10143) in a vertical direction along the vertical axis (V-V') to define one or more vents (10044), therebetween;
at least one flap (10045) is disposed proximal to each of the one or vents (10044), one end of each of the at least one flap (10045) being pivotally connected to the first portion (10143) of the roof panel (10043) and being selectively displaceable between a first position (A) and a second position (B); and
a filter element (10046) being structured to be disposed in a receiving pocket (10047) defined in the at least one flap (10045) on a major surface facing an inner portion of the enclosure (10041).

12. The switchgear cabinet (1000) as claimed in claim 11, wherein the receiving pocket (10047) is defined by a pair of arms (10147) and a restraining member (10247).

13. The switchgear cabinet (1000) as claimed in claim 11, wherein the pair of arms (10147) being structured to protrude perpendicularly from the major surface of the at least one flap (10045) and being separated by a distance (X), and a restraining member (10247) extending between the pair of arms (10147), thereby defining a gap (G) between each of the at least one flap (10045) and the restraining member (10247), the gap (G) structured to receive the filter element (10046).

14. The switchgear cabinet (1000) as claimed in claim 11 comprises a locking unit (10050) associated with each of the at least one flap (10045), the locking unit (10050) being structured to lock the at least one flap (10045) in the first position (FP) and being operable to unlock the at least one flap (10045) relative to one other to displace the at least one flap (10045) to the second position (SP).

15. A switchgear cabinet (1000) comprising:
a low voltage compartment (1001);
a cable compartment (1003);
a circuit breaker compartment (1002);
a bus bar compartment (1006);
a gas-duct compartment (1004), being structured to be secured to a roof plate (10001) of the switchgear cabinet (1000), wherein the roof plate (10001) being contiguous with a top wall of the at least one of the circuit breaker compartment (1002), the low voltage compartment (1001), the busbar compartment (1006), and/or the cable compartment (1003) and being defined with a plurality of roof openings for exchange of gases between the enclosure (10041), and the circuit breaker compartment (1002), the low voltage compartment (1001), the busbar compartment (1006), and/or the cable compartment (1003), the gas-duct compartment (1004) comprising:
a sidewall structure (10042) having a length (L) extending along a vertical axis (V-V') of the switchgear cabinet (1000), wherein the sidewall structure is defined with a first end (FE) and an open second end (SE), and wherein one sidewall of the sidewall structure (10042) is defined with an opening;
a roof panel (10043) being structured to encompass the first end (FE) of the sidewall structure (10042);
a duct (1007), one end of the duct (1007) being secured to the opening defined in the sidewall structure (10042) and extending therefrom along a transverse axis (T-T') and an other end of the duct (1007) opposite to the one end being defined with the one or more vents (10044); and
a filter element (10046) being structured to be secured to the one or more vents (10044).
